# EUROPEAN PATENT APPLICATION

(11) **EP 1 645 592 A1**
(43) Date of publication of application: **12.04.2006**
(21) Application number: 05256199.0
(22) Date of filing: 04.10.2005
(51) Int. Cl.: C08K 5/19, C08K 5/17, C08K 5/3432

(54) **Thermal stabilizer compositions for halogen-containing vinyl polymers**

(30) Priority: 07.10.2004 US 616746
(71) Applicant: Rohm and Haas Company, Philadelphia, PA 19106-2399 (US)
(72) Inventor: Austen, Steven Christopher, Loveland, Ohio 45140 (US); Conroy, Gary M., Cincinnati, Ohio 45248 (US); Stewart, Thomas, Doylestown, Pennsylvania 18901 (US)
(74) Representative: Kent, Venetia Katherine

(57) **Abstract**

Beneficial stabilizer compositions are employed to stabilize halogen-containing vinyl polymers from, for example, degradation and discoloration. The stabilizer compositions comprise a substantially metal-free perchlorate; a first amine-containing stabilizer; and a second amine-containing stabilizer; wherein the first and second amine-containing stabilizers are selected from an aminoalcohol, a dihydropyridine, an aminocrotonate, an aminouracil, a phenyl indole, or a mixture comprising one or more of the foregoing amine-containing stabilizers; and wherein the first and second amine-containing stabilizers are different types of stabilizers.

## Description

### BACKGROUND

This invention relates to stabilizer compositions for halogen-containing vinyl polymers, the stabilized halogen-containing vinyl polymer compositions and articles formed therefrom, and methods for stabilizing halogen-containing vinyl polymers.

Halogen-containing vinyl polymers, for example, poly(vinyl chloride) (PVC), copolymers of vinyl chloride and vinyl acetate, and poly(vinylidene chloride), are commonly used for fabricating a variety of articles such as pipes, window casings, siding, bottles, wall covering, and packaging film. There have been many attempts to add stabilizers to halogen-containing vinyl polymers to improve the color hold in the polymer resins, particularly the color hold within the processing window, e.g., during the initial processing and during any subsequent re-processing. Most stabilizer compositions in present use contain metals such as tin, cadmium, and even lead. While these stabilizer compositions can be effective for minimizing discoloration during initial processing, as well as during any subsequent re-processing, there has been increasing interest in developing stabilizer compositions that are free of tin, cadmium, and/or lead for environmental, cost, and other reasons.

Stabilizer compositions comprising various types of amines have been described. For example, U.S. Patent No. 3,288,744, discloses that tris(hydroxymethyl)aminomethane is useful for stabilizing halogen-containing vinyl polymers, but that other alkanolamines are unexpectedly poorer. Use of alkanolamines in combination with other stabilizer components is disclosed, for example, in Japanese Publication No. 61-009451, which is directed to a stabilizer composition containing the perchlorate salt of mono-, di-, or triethanolamine. WO 02/48249 discloses stabilizer compositions containing an aminoalcohol, a metal perchlorate salt, and optionally other known stabilizers for use in flexible and rigid PVC formulations. This application teaches that this two-part combination is preferred over the perchlorate salts of triethanolamine taught in Japanese Publication No. 61-009451 due to the alleged heat and shock sensitive nature of the triethanolamine perchlorate salts. DE 101 18 179 A1 discloses stabilizer compositions containing an aminoalcohol, together with a metal perchlorate salt, certain types of enamines, or both. Exemplary enamines include alpha, beta-unsaturated beta-aminocarboxylic acids such as beta-crotonic acid esters and aminouracils. Dihydropyridines are not within the scope of the disclosure.

Nonetheless, there remains a need in the art for improved stabilizer compositions for halogen-containing vinyl polymers, particularly compositions that are free from cadmium, tin, and/or lead, and that provide improved resistance to discoloration during processing and/or use.

### STATEMENT OF THE INVENTION

In a first aspect, there is provided a thermal stabilizer composition comprising a substantially metal-free perchlorate; a first amine-containing stabilizer; and a second amine-containing stabilizer; wherein the first and second amine-containing stabilizers are selected from an aminoalcohol, a dihydropyridine, an aminocrotonate, an aminouracil, a phenyl indole, or a mixture comprising one or more of the foregoing amine-containing stabilizers; and wherein the first and second amine-containing stabilizers are different types of stabilizers.

In a second aspect, there is provided a stabilized polymer composition comprising a halogen-containing vinyl polymer and the above-described stabilizer composition.

In another aspect, there is provided an article comprising the above-described stabilized polymer composition.

In another aspect, there is provided a method of stabilizing a polymer composition, comprising adding the above-described stabilizer composition to a halogen-containing vinyl polymer composition.

It has been unexpectedly discovered herein that substantially metal-free perchlorates, together with certain amine-containing stabilizers, can be blended with PVC and exhibit beneficial stabilization.

### DETAILED DESCRIPTION

The terms "a" and "an" herein do not denote a limitation of quantity, but rather denote the presence of at least one of the referenced item. The abbreviation "phr" refers to parts by weight of a particular component per 100 parts by weight of the halogen-containing vinyl polymer.

As used herein, "alkyl" is intended to include both branched and straight-chain saturated aliphatic hydrocarbon groups, having the specified number of carbon atoms. Thus, the term C₁- C₆ alkyl as used herein includes alkyl groups having from 1 to 6 carbon atoms. When C₀-Cₙ alkyl is used herein in conjunction with another group, for example, (phenyl)C₀-C₄ alkyl, the indicated group, in this case phenyl, is either directly bound by a single covalent bond (Co), or attached by an alkyl chain having the specified number of carbon atoms, in this case from 1 to about 4 carbon atoms. Examples of alkyl include, but are not limited to, methyl, ethyl, n-propyl, isopropyl, n-butyl, t-butyl, n-pentyl, and sec-pentyl.

"Alkenyl" as used herein, indicates a hydrocarbon chain of either a straight or branched configuration having one or more carbon- carbon double bond bonds, which may occur at any stable point along the chain. Examples of alkenyl groups include ethenyl and propenyl.

"Alkoxy" represents an alkyl group as defined above with the indicated number of carbon atoms attached through an oxygen bridge. Examples of alkoxy include, but are not limited to, methoxy, ethoxy, n- propoxy, i- propoxy, n-butoxy,2-butoxy, t-butoxy, n-pentoxy, 2-pentoxy, 3- pentoxy, isopentoxy, neopentoxy, n-hexoxy, 2-hexoxy, 3-hexoxy, and 3- methylpentoxy.

As used herein, the term "aryl" indicates aromatic groups containing only carbon in the aromatic ring or rings. Typical aryl groups contain 1 to 3 separate, fused, or pendant rings and from 6 to 18 ring atoms, without heteroatoms as ring members. When indicated, such aryl groups may be further substituted with carbon or non-carbon atoms or groups. Such substitution may include fusion to a 5 to 7-membered saturated cyclic group that optionally contains 1 or 2 heteroatoms independently chosen from N, O, and S, to form, for example, a 3,4-methylenedioxyphenyl group. Aryl groups include, for example, phenyl, naphthyl, including 1-naphthyl and 2-naphthyl, and bi-phenyl.

In the term arylalkyl, aryl and alkyl are as defined above, and the point of attachment is on the alkyl group. This term encompasses, but is not limited to, benzyl, phenylethyl, and piperonyl.

The term "alkylthio" indicates an alkyl group as defined above attached through a sulfur linkage, i.e. a group of the formula alkyl-S-. Examples include ethylthio and pentylthio.

As used herein, the term alkylamino includes secondary or tertiary alkyl amino groups, wherein the alkyl groups are as defined above and have the indicated number of carbon atoms. The point of attachment of the alkylamino group is on the nitrogen. Examples of mono- and di-alkylamino groups include ethylamino, dimethylamino, and methyl-propyl-amino.

An effective stabilizer composition for halogen-containing vinyl polymers comprises a substantially metal-free perchlorate; a first amine-containing stabilizer; and a second amine-containing stabilizer; wherein the first and second amine-containing stabilizers are selected from an aminoalcohol, a dihydropyridine, an aminocrotonate, an aminouracil, a phenyl indole, or a mixture comprising one or more of the foregoing amine-containing stabilizers; and wherein the first and second amine-containing stabilizers are different types of stabilizers. For example, if the first amine-containing stabilizer is a dihydropyridine, the second amine-containing stabilizer is an aminoalcohol, an aminocrotonate, an aminouracil, a phenyl indole, or a mixture comprising one or more of the foregoing stabilizers.

As used herein, a "substantially metal-free perchlorate" refers to a compound of the formula X(ClO₄) wherein X may be hydrogen or one or more counterions, but not a metal counterion. The counterion may comprise, for example, an amine-containing stabilizer.

By metal-free, it is meant that the perchlorate salt is free of, for example, Li, Na, K, Mg, Ca, Sr, Zn, Al, La and Ce. By substantially metal-free, it is meant that the only metals present in the metal-free perchlorate salt are impurities. A substantially metal-free perchlorate salt comprises less than about 1 wt% of metal based on the total weight of the perchlorate salt.

The stabilizer composition may also be substantially metal-free, for example having less than 0.5 wt% of metal impurities based on the total weight of the stabilizer composition. More specifically, the stabilizer composition may comprise less than 0.1 wt% of metal impurities based on the total weight of the stabilizer composition. The substantially metal-free perchlorate may be provided to the stabilizer composition in the form of hydrogen perchlorate, a hydrated form of hydrogen perchlorate, a perchlorate salt, a perchlorate salt comprising the first amine-containing stabilizer, a perchlorate salt comprising the second amine-containing stabilizer, or a combination comprising one or more of the foregoing perchlorates, provided that the perchlorate is substantially metal-free as described above. When the perchlorate is added in the form of hydrogen perchlorate, the first and second amine-containing compounds may be added as amines or salts with other counterions. It is to be understood that upon combination, the perchlorate may or may not dissociate to some degree, and may or may not become associated with other counterions present in the composition. Accordingly, as used herein, a "thermal stabilizer composition comprising a substantially metal-free perchlorate, a first amine-containing stabilizer, and a second amine-containing stabilizer" is intended to encompass compositions formed by any combination of any perchlorate- containing compound, any first amine-containing stabilizer compound, and any second amine-containing stabilizer compound, provided, of course, that the perchlorate is substantially metal free as described above.

Metal-free perchlorate salts of an amine-containing stabilizer can be formed, for example, by adding an amine-containing stabilizer to an aqueous solution of perchloric acid. When the molar ratio of perchloric acid to amine-containing stabilizer is 1:1, for example, a neutral salt is formed. It is also possible to obtain a basic salt, such as the salt formed when an excess of amine-containing stabilizer is added relative to the perchloric acid. For example, 0.6 to less than 1 mole of perchloric acid may be reacted with one mole of amine-containing stabilizer. It is further possible to obtain an acid salt that comprises an excess of perchloric acid relative to the amine-containing stabilizer. For example, greater than 1 to 1.2 moles of perchlorate may be used with one mole of amine-containing stabilizer.

Suitable dihydropyridines for the first and second amine-containing stabilizer are of formula (1) 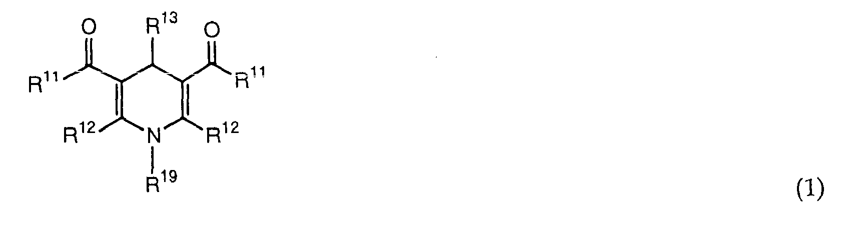 wherein each R¹² is independently a C₁-C₃₆ alkyl group, preferably a methyl or ethyl group. Each R¹¹ is independently hydrogen, -OR¹⁴, -NHR²⁴, or -NR¹⁴R¹⁵, wherein R¹⁴ and R¹⁵ are each independently a C₁-C₂₀ alkyl group, a C₁-C₂₀ alkoxy group, or a C₂₋C₂₀ alkenyl group. Each of the foregoing may be substituted or unsubstituted with groups that do not adversely affect use of the composition. A preferred substitutent is an alkoxy group. In one embodiment, R¹¹ is -OR¹⁴, wherein R¹⁴ is a C₁-C₆ alkyl group. Each R¹³ is independently hydrogen, oxygen, halogen, or a C₁-C₃₆ alkyl, alkenyl, aryl, alkaryl, or aralkyl group, wherein the carbon containing groups may be substituted or unsubstituted with groups that do not adversely affect use of the composition. R¹⁹ is a hydrogen, C₁-C₂₀ alkyl group, C₆-C₃₆ aryl group, or a C₂-C₂₀ alkenyl group. Each of the foregoing may be substituted or unsubstituted with groups that do not adversely affect use of the composition. In one embodiment, R¹⁹ is hydrogen. Suitable dihydropyridines include, for example, 3,5-bis(ethoxycarbonyl)-2,6-dimethyl-1,4-dihydropyridine.

Alternatively, or in addition to a dihydropyridine, a polydihydropyridine of formula (2) may be used 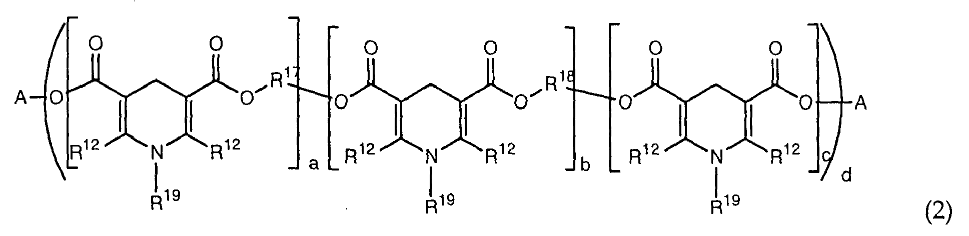 wherein A is a C₆₋₁₈ aryl, C₂₋₂₂ alkenyl, or C₁₋₂₂ alkyl, each of which may be unsubstituted or substituted with a C₁-C₁₈ alkoxy, a C₁-C₁₈ alkylthio, hydroxy, acryloyloxy, methacryloyloxy, halogen, phenyl or naphthyl. Each R¹² is independently a C₁ to C₃₆ alkyl group, preferably a methyl or ethyl group. a and b are numbers from 0 to 20, c is 0 or 1, and d is a number from 1 to 6, with the proviso that d(a+b+c)>1 and (a+b)>0. R¹⁷ and R¹⁸ are each independently methylene, phenyl, or an alkylene group of the type (-CₚH₂ₚ-X-)ₜCₚH₂ₚ-, wherein p is a number from 2 to 18, t is a number from 0 to 10, and X is oxygen or sulfur. R¹⁹ is a hydrogen, C₁-C₂₀ alkyl group, a C₆-C₃₆ aryl group, or a C₂-C₂₀ alkenyl group. Each of the foregoing may be substituted or unsubstituted with groups that do not adversely affect use of the composition. In one embodiment, R¹⁹ is hydrogen. Suitable polydihydropyridines may be, for example, thiodiethylene-bis[5-methoxycarbonyl-2,6-di methyl-1,4- dihydropyridine-3-carboxylate].

When provided in the form of a perchlorate salt or an amine-containing stabilizer, effective amounts of dihydropyridine and/or polydihydropyridine are 0.001 to 10 parts by weight per hundred parts by weight of resin (phr). Within this range, amounts of greater than 0.005 phr, or greater than 0.01 phr may be employed, and amounts of less than 5 phr, or less than 3 phr may also be employed.

Suitable aminoalcohols for the first and second amine-containing stabilizer have the structure shown in formula 3: 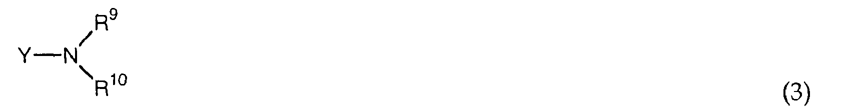 wherein Y is a substituted or unsubstituted C₁-C₃₆ alkyl, alkenyl, aryl, alkaryl, or aralkyl group. In one embodiment, Y is a C₁-C₁₂ alkyl or aryl group. In another embodiment, Y is a C₁-C₄ alkyl group comprising at least one hydroxy group.

R⁹ and R¹⁰ in formula (3) are each independently hydrogen or a substituted or unsubstituted C₁-C₃₆ alkyl, alkenyl, aryl, alkaryl, or aralkyl group. In one embodiment, R⁹ and R¹⁰ are each independently hydrogen, or a C₁-C₁₂ alkyl or aryl group, or a hydrogen or a C₁-C₄ alkyl group comprising at least one hydroxy group. Two of Y, R⁹, or R¹⁰ may join together to form a substituted or unsubstituted C₂-C₃₆ carbocylic or heterocyclic group wherein the heteroatoms are oxygen or sulfur.

Suitable substituents for Y, R⁹, and R¹⁰ are those that do not adversely affect use of the thermal stabilizer composition, and include, for example, primary amines, carboxylic acids, carbonyl groups, halogens, C₂-C₁₈ heterocycles comprising oxygen or sulfur in the ring, or secondary amines, tertiary amines, carboxylic esters, amides, or ethers substituted with alkyl, alkenyl, aryl, aralkyl or aryl groups, with the exception of heterocyclic rings containing only nitrogen and carbon as ring-forming atoms.

Y, R⁹, and R¹⁰ may be substituted so as to provide the aminoalcohol with two or more hydroxy groups. The two or more hydroxy groups may be present on one of Y, R⁹, and R¹⁰, or any combination of Y, R⁹, and R¹⁰. Suitable aminoalcohols within the scope of formula (3) include, for example, tris(2-hydroxyethyl)amine, tris(2-hydroxy-1-propyl)amine, bis(2-hydroxyethyl)-2-hydroxy-1-propylamine, N-(n-butyl)-N,N-bis(2-hydroxyethyl)amine, N,N-bis(*n*-butyl)-N-(2-hydroxyethyl)amine, N-(3-n-butyloxy-2-hydroxy-1-propyl)-N,N-bis(2-hydroxyethyl)amine, and N-(1,3-dihydroxy-2-hydroxymethyl-2-propyl)-N,N-bis(2-hydroxyethyl)amine, and the like. Mixtures of aminoalcohols may be used. Suitable aminoalcohols within the scope of formula (3) include, for example, triethanolamine, tris(hydroxymethyl)aminomethane, N-methyl glucamine, N,N'-bis (2-hydroxyethyl)ethylene diamine, and mixtures comprising one or more of the foregoing aminoalcohols.

When provided in the form of a perchlorate salt, the aminoalcohol salts may be used in amounts of 0.001 to 5 phr. Within this range, amounts of greater than 0.01 phr, or greater than 0.1 phr, may be employed. Also within this range, amounts of less than 4 phr, or less than 3 phr, may be employed. When employed in the form of an amine-containing stabilizer, the aminoalcohols may be used in amounts of 0.001 to 10 phr. Within this range, amounts of greater than 0.01 phr, or greater than 0.1 phr, may be employed. Also within this range, amounts of less than 6 phr, or less than 3 phr, may be employed.

Suitable aminocrontonates for the first and second amine-containing stabilizer have the general structure shown in formula 4: 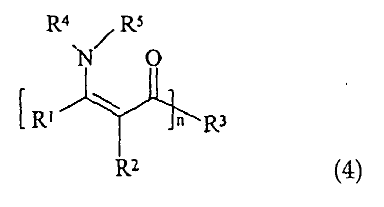 wherein n is a number of 1 to 100,000. R⁴, R⁵, R¹ and R² denote each, independently from one another, hydrogen; optionally substituted straight-chain or branched, saturated or unsaturated C₁-C₄₄ aliphatic alkyl; optionally substituted, saturated or unsaturated C₆-C₄₄ cycloalkyl; optionally substituted C₆-C₄₄ aryl; or optionally substituted C₇-C₄₄ aralkyl. In one embodiment, R¹ denotes optionally substituted C₂₋C₄₄ acyl. In another embodiment, R¹ and R² are connected to an aromatic or heterocyclic system. R³ is hydrogen; optionally substituted, straight-chain or branched, saturated or unsaturated C₁-C₄₄ aliphatic alkyl, alkenyl, alkoxy, alkylthio, or alkylamino; optionally substituted, saturated or unsaturated C₆-C₄₄ cycloalkyl, cycloalkylene, oxycycloalkyl, oxycycloalkylene, mercaptocycloalkyl, mercaptocycloalkylene, aminocycloalkyl or aminocycloalkylene; optionally substituted C₆-C₄₄ aryl or arylene radical; or an ether or thioether radical containing 1 to 20 oxygen and/or sulfur atoms, or a polymer that is connected to the structural element in parentheses via O, S, NH, NR⁴ or CH₂C(O). R³ may be connected to the R¹ such that an optionally substituted, saturated or unsaturated C₄-C₂₄ heterocyclic ring system is formed as a whole.

In one embodiment, a compound based on an α,β-unsaturated β-aminocarboxylic acid, especially on a β-aminocrotonic acid, is used as a compound according to the general formula 4. The esters or thioesters of the corresponding aminocarboxylic acids with monohydric or polyhydric alcohols or mercaptans, wherein X always denotes O or S may be employed.

If R³ is an alcohol or mercaptan, R³ may be formed from, for example, methanol, ethanol, propyl alcohol, isopropyl alcohol, butanol, 2-ethylhexanol, isooctanol, isononanol, decanol, lauryl alcohol, myristyl alcohol, palmityl alcohol, stearyl alcohol, ethylene glycol, propylene glycol, 1,3-butanediol, 1,4-butanediol, 1,6-hexanediol, 1,10-decanediol, diethylene glycol, thio-diethanol, trimethylol propane, glycerol, tris-(2-hydroxymethyl) isocyanurate, triethanolamine, pentaerythritol, ditrimethylol propane, diglycerol, sorbitol, mannitol, xylitol, di-pentaerythritol as well as the corresponding mercapto derivatives of these alcohols.

In one embodiment, R¹ is a C₁-C₄ straight-chain alkyl radical; R² is hydrogen; and R³ is a straight-chain or branched, saturated, monovalent to hexavalent C₂-C₁₂ alkyl or alkenyl radical, or a straight-chain, branched or cyclic divalent to hexavalent ether alcohol radical, or thioether alcohol.

Suitable compounds according to the general formula 4 include, for example, β-aminocrotonic acid stearyl ester, 1,4-butanediol di(β-aminocrotonic acid) ester, thio-diethanol-β-aminocrotonic acid ester, trimethylol propane tri-β-aminocrotonic acid ester, pentaerythritol tetra-β-aminocrotonic acid ester, dipentaerythritol hexa-β-aminocrotonic acid ester, and the like, and mixtures comprising one or more of the foregoing aminocrotonates.

When provided in the form of a perchlorate salt or an amine-containing stabilizer, the aminocrotonates may be used in amounts of 0.001 to 10 phr. Within this range, amounts of greater than 0.01 phr, or greater than 0.1 phr, may be employed. Also within this range, amounts of less than 5 phr, or less than 3 phr, may be employed.

Suitable uracils for the first and second amine-containing stabilizer have the general structure shown in formula 5: 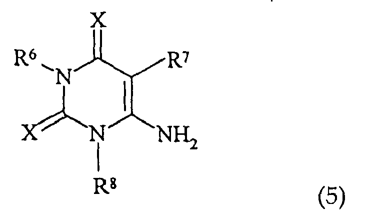 wherein X is O or S; R⁶ and R⁸ are each independently hydrogen or substituted or unsubstituted, straight chain or branched C₁-C₁₂ alkyl (e.g., methyl, ethyl, propyl, butyl, pentyl or hexyl), C₃-C₆ alkenyl, C₅-C₈ cycloalkyl, or C₇-C₉ aralkyl; R⁷ is hydrogen or substituted or unsubstituted, straight chain or branched C₁-C₄₄ alkyl (e.g., methyl, ethyl, propyl, butyl, pentyl or hexyl), C₃-C₄₄ alkenyl, C₆-C₄₄ cycloalkyl, or C₇-C₄₄ aralkyl.

When provided in the form of a perchlorate salt or an amine-containing stabilizer, the aminouracils may be used in amounts of 0.001 to 10 phr. Within this range, amounts of greater than 0.01 phr, or greater than 0.1 phr, may be employed. Also within this range, amounts of less than 6 phr, or less than 3 phr, may be employed.

Suitable phenyl indoles for the first and second amine-containing stabilizer have the general structure shown in formula 6 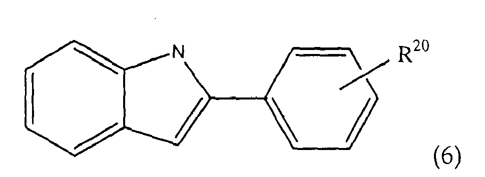 wherein R²⁰ is hydrogen, or a linear or branched C₁-C₂₀ alkyl or a cycloalkyl chain. The position of R²⁰ on the aromatic nucleus is may be ortho, meta or para. A suitable phenyl indole is 2-phenyl indole.

When provided in the form of a perchlorate salt or an amine-containing stabilizer, the phenyl indoles may be used in amounts of 0.001 to 12 phr. Within this range, amounts of greater than 0.01 phr, or greater than 0.1 phr, may be employed. Also within this range, amounts of less than 8 phr, or less than 4 phr, may be employed.

Suitable metal-free perchlorate salts of amine-containing stabilizers include, for example, triethanolammonium perchlorate (which may be derived from the reaction of perchloric acid and triethanolamine), dihydropyridinium perchlorate (which may be derived from the reaction of perchloric acid and dihydropyridine), and mixtures comprising one or more of the foregoing stabilizers. These stabilizers are illustrated below by formulas 7 and 8, respectively.

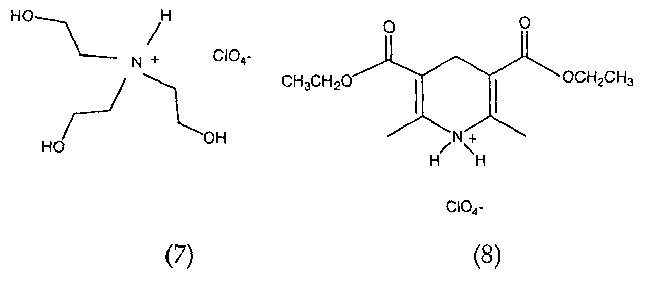

In one embodiment, a stabilizer composition comprises a perchlorate salt of an amino alcohol, and a dihydropyridine. In another embodiment, a stabilizer composition comprises a perchlorate salt of a dihydropyridine, and an amino alcohol.

Optionally, the composition may include additional co-stabilizers, such as, for example, epoxy compounds, polyols, sterically hindered amines, phosphites, mercaptocarboxylic esters, hydrotalcites, zeolites, dawsonites, organic zinc compounds, and the like, and mixtures comprising one or more of the foregoing co-stabilizers. Suitable epoxy compounds include, for example, epoxidized oils such as soybean oil, lard oil, olive oil, linseed oil, peanut oil, tung oil, cottonseed oil, and mixtures comprising one or more of the foregoing epoxy compounds. Other suitable epoxy compounds include, for example, epichlorohydrin/bis-phenol A resins, butoxypropylene oxide, glycidyl epoxystearate, epoxidized α-olefins, epoxidized glycidyl soyate, and epoxidized butyl toluate; the glycidyl esters of organic carboxylic acids, the glycidyl ethers of resorcinol, hydroquinone, 1,5-dihydroxynaphthalene, glycerine, pentaerythritol, and sorbitol; allyl glycidyl ether, butyl glycidyl ether, cyclohexane oxide, 4-(2,3-epoxypropoxy)acetophenone, mesityl oxide epoxide, 2-ethyl-3-propyl glycidamine, and mixtures comprising one or more of the foregoing epoxy compounds. The epoxy may be present in amounts of up to 30 phr.

Suitable polyols include, for example, diethylene glycol, glycerin, polyvinyl alcohol, pentaerythritol, dipentaerythritol, tripentaerythritol, bistrimethylolpropane, trimethylolpropane, inosite, polyvinyl alcohol, sorbitol, mannitol, lactose, tris(hydroxyethyl)isocyanurate, tetramethylolcyclohexanol, tetramethylolcyclopyranol, glycerol, diglycerol, polyglycerol, or mixtures comprising at least one of the foregoing. Preferred polyols include, for example, sorbitol and trimethylolpropane. The polyols can be used in an amount of, for example, 0.01 to 20 phr, or 0.1 to 10 phr.

Useful sterically hindered amines include, for example, monomeric, oligomeric, or polymeric 2,2,6,6-tetramethylpiperidine compounds. The nitrogen of the piperidine moiety may be substituted by, for example, hydrogen, C₁-C₁₂ alkyl, C₃
- C₈ alkenyl, or C₇-C₁₂ aralkyl. The C-4 carbon of the piperidine moiety may be substituted by, for example, hydrogen or oxygen or nitrogen-containing groups. Suitable 2,2,6,6-tetramethylpiperidine compounds include, for example, 4-hydroxy-2,2,6,6-tetramethylpiperidine, 1-benzyl-4-hydroxy-2,2,6,6-tetramethylpiperidine, 4-stearoyloxy-2,2,6,6-tetramethylpiperidine, 1,2,2,6,6-pentamethylpiperidin-4-yl-beta-(3,5-di-tert-butyl-4-hydroxyphenyl) propionate, di(2,2,6,6-tetramethylpiperidin-4-yl) succinate, 1-acetyl-2,2,6,6-tetramethylpiperidin-4-yl acetate, trimellitic acid tri(2,2,6,6-tetramethylpiperidin-4-yl) ester, and the like. The piperidines can be used in an amount of, for example 0.01 to 1 phr, or 0.1 to 0.5 phr.

Suitable phosphites include, for example, trialkylphosphites such as trioctyl phosphite, tridecyl phosphite, tridodecyl phosphite, tri(tetradecyl) phosphite, tricyclohexyl phosphite, tristearyl phosphite, distearyl-pentaerythritol diphosphite, or trioleyl phosphite; triaryl phosphites such as triphenyl phosphite, tricresyl phosphite, or tris-p-nonylphenyl phosphite; alkyldiaryl phosphites such as phenyldidecyl phosphite or (2,4-di-tert-butylphenyl)didodecyl phosphite; dialkylaryl phosphites; thiophosphites such as trithiohexyl phosphite, trithiooctyl phosphite, trithiolauryl phosphite, or trithiobenzyl phosphite; or mixtures comprising any one or more of the foregoing phosphites. The phosphites can be used in an amount of, for example, 0.01 to 10 phr, or 0.05 to 5 phr, or 0.1 to 3 phr.

Suitable mercaptocarboxylic acid esters include, for example, 2-mercaptoethylester, esters of thioglycolic acid, thiomalic acid, mercaptopropionic acid, mercaptobenzoic acids, or thiolactic acid. Mercaptocarboxylic esters can be used in an amount of, for example, 0.01 to 10 phr, or 0.05 to 5 phr, or 0.1 to 3 phr.

Suitable hydrotalcites include, for example, those having the formula Al₂O₃ 6MgO CO₂ 12H₂O, Mg_{4,5} Al₂(OH)₁₃ CO₃ 5H₂O, 4MgO Al₂O₃ CO₂ 9H₂O, 4MgO Al₂O₃CO₂ 6H₂O, ZnO 3MgO Al₂O₃ CO₂ 8-9H₂O, or ZnO 3MgO Al₂O₃ CO₂ 5-6H₂O. Suitable zeolites (alkali and alkaline earth aluminosilicates) include, for example, zeolite A, sodalite, zeolite Y, zeolite X, zeolite P, zeolites MAP, zeolites K-F, potassium offretite, zeolite T, and the like, and mixtures comprising at least one of the foregoing zeolites. Hydrotalcites and/or zeolites can be used in an amount of, for example, 0.1 to 20 phr, advantageously at least 0.1 phr. The hydrotalcite and/or zeolites may also be used in an amount of less than 10 phr, or less than 5 phr.

Metal-based stabilizers are defined as being tin-free and lead-free metal salts. Metal salts include oxides, hydroxides, sulfides, sulfates, chlorides, bromides, fluorides, iodides, phosphates, phenates, perchlorates, carboxylates, and carbonates of metals including zinc, barium, strontium, calcium, magnesium, cobalt, nickel, titanium, antimony, and aluminum. Salts of, for example, phenols, aromatic carboxylic acids, fatty acids, epoxidized fatty acids, oxalic acid, acetic acid, and carbonic acid may be employed. Calcium stearate, calcium 2- ethylhexanoate, calcium octanoate, calcium oleate, calcium ricinoleate, calcium myristate, calcium palmitate, calcium laurate, barium laurate, barium stearate, barium di(nonylphenolate), magnesium stearate, zinc octanoate (or caprylate), zinc 2-ethylhexanoate, zinc stearate, zinc laurate, zinc oxide, zinc hydroxide, zinc sulfide, and Group I and II metal soaps in general are examples of suitable salts along with aluminum stearate. Combinations of metal salts may also be employed. The metal-based stabilizer may be employed in amounts of 0.01 wt% to 0.5 wt% of the weight of the halogen containing vinyl polymer.

As used herein, the term halogen-containing vinyl polymer means a halogen-containing polymer in which the halogens are attached directly to a carbon atom. Suitable halogen-containing polymers include, for example, chlorinated polyethylene having 14 to 75%, e.g., 27%, chlorine by weight, chlorinated natural and synthetic rubber, rubber hydrochloride, chlorinated polystyrene, chlorinated poly(vinylidene chloride), chlorinated poly(vinyl chloride), poly(vinyl bromide), poly(vinyl fluoride), other vinyl chloride polymers, and mixtures comprising one or more of the foregoing polymers. The vinyl chloride polymers known as polyvinyl chloride (PVC) are made from vinyl chloride monomers alone or a mixture of monomers comprising, preferably, at least 70% by weight of vinyl chloride, based on the total monomer weight. Suitable co-monomers include, for example, vinyl acetate, vinyl butyrate, vinyl benzoate, vinylidene chloride, trichloroethylene, 1-fluoro-2-chloroethylene, diethyl fumarate, diethyl maleate, methyl acrylate, 2-ethylhexyl acrylate, methyl alpha-chloroacrylate, methyl methacrylate, ethyl methacrylate, butyl methacrylate, styrene, vinyl ketones such as vinyl methyl ketone and vinyl phenyl ketone, acrylonitrile, chloroacrylonitrile, allylidene diacetate, chloroallylidene diacetate, and vinyl ethers such as vinyl ethyl ether, vinyl phenyl ether, the vinyl ether prepared by the reaction of one mole of acrolein with one mole of ethylene glycol divinyl ether, and mixtures comprising one or more of the foregoing co-monomers. Suitable halogen-containing vinyl copolymers include, for example, vinyl chloride-vinyl acetate, vinyl chloride-vinyl acetate (87:13), vinyl chloride-vinyl acetate-maleic anhydride (86:13:1), vinyl chloride-vinylidene chloride (95:5); vinyl chloride-diethyl fumarate (95:5), vinyl chloride 2-ethylhexyl acrylate (80:20), and mixtures comprising one or more of the foregoing copolymers.

A rigid halogen-containing vinyl polymer composition is one that does not contain a plasticizer. A semi-rigid halogen-containing vinyl polymer composition contains 1 to 25 parts of a plasticizer per 100 parts by weight of the halogen-containing vinyl polymer. A flexible halogen-containing vinyl polymer composition contains 25 to 100 parts of a plasticizer per 100 parts by weight of the halogen-containing vinyl polymer. Suitable plasticizers include, for example, alkyl esters of polyacids in which there are from 1 to 3 alkyl groups having from 8 to 12 carbon atoms. Suitable alkyl groups of the alkyl ester include, for example, n-octyl, 2-ethylhexyl, decyl, dodecyl, and mixtures comprising one or more of the foregoing alkyl groups. Suitable polyacids for the alkyl ester include, for example, phthalic acid, trimellitic acid, benzoic acid, adipic acid, sebacic acid, glutaric acid, phosphates, and the like. Polymeric plasticizers are also suitable.

Optionally, the halogen-containing polymer compositions may include other conventional additives such as, for example, antioxidants, lubricants, fillers, pigments, impact modifiers, processing aids, blowing agents, dyes, ultraviolet light absorbing agents, densifying agents, biocides, and mixtures comprising one or more of the foregoing additives. Suitable amounts of the foregoing additives are readily determined by one of ordinary skill in the art depending on the desired final properties and end use of the compositions. In general, each additive is present in an amount of 0.01 to 10 wt%, specifically 0.1 to 5 wt%, based on the total weight of the halogen-containing vinyl polymer.

Suitable antioxidants include, for example, phenolic antioxidants such as 2,6-di-t-butyl-p-cresol, butylated hydroxyanisole, 4,4'-thiobis(6-t-butyl-m-cresol), 4,4'-cyclohexylidenediphenol, 2,5-di-t-amyl hydroquinone, 4,4'-butylidene bis(6-t-buytl-m-cresol), hydroquinone monobenzyl ether, 2,2'-methylene-bis(4-methyl-6-t-butyl phenol), 2-t-butyl-4-dodecyloxy phenol, p-amino phenol, N-lauryloxy-p-amino phenol, 4,4'-thiobis(3-methyl-6-t-butyl phenol), bis [o-(1,1,3,3-tetramethyl butyl)phenol] sulfide, 4-dodecyoxy-2-hydroxybenzophenone, n-dodecyl ester of 3-hydroxy-4-(phenyl carbonyl)phenoxyacetic acid, t-butyl phenol, and mixtures comprising one or more of the foregoing antioxidants.

Suitable lubricants include, for example, paraffin waxes, salts of fatty acids, low molecular weight polyethylene (i.e., polyethylene wax), fatty acid amides (i.e., laurimide and stearamide), bis amides (i.e., decamethylene, bisamide), fatty acid esters (e.g., butyl stearate, glyceryl stearate, linseed oil, palm oil, decyloleate, corn oil, cottonseed oil, and the like), and mixtures comprising one or more of the foregoing lubricants. Suitable fillers include, for example, calcined clays, calcium carbonate, talcs, and mixtures comprising one or more of the foregoing fillers. Suitable pigments include, for example, titanium dioxide, carbon black, iron oxide, and mixtures comprising one or more of the foregoing pigments.

In general, the above-described thermal stabilizer compositions are provided as a one-part mixture formulated so as to provide one or more substantially metal-free perchlorate salts of an amine-containing stabilizer, and at least one of one or more amine-containing stabilizers in amounts effective to result in a beneficial improvement in thermal stability. As other optional additives may also be present in the one-part mixture, the particular amount of each component may vary from 0.1 to 99.9% percent by weight, specifically 1.0 to 99.0% by weight based on the total weight of the one-part mixture. Particular amounts effective to result a beneficial improvement in thermal stability are readily determined by one of ordinary skill in the art.

The halogen-containing vinyl polymer compositions may be prepared by blending under low or high shear. Likewise, the thermal stabilizer compositions may be incorporated in the halogen-containing vinyl polymer composition by mixing the components thereof and the polymer in an appropriate mill or mixer or by another method that provides uniform distribution of the stabilizer throughout the polymer. Depending on the compatibility and physical state (i.e., liquid or solid) the components of the blend may require heating to form a uniform stabilized polymer composition having the desired performance characteristics.

The stabilized halogen-containing vinyl polymer composition can be used to form a variety of rigid articles such as, for example, house siding, window profiles, and pipe using a variety of techniques to shape the articles such as, for example, molding, extrusion, and injection molding.

In one embodiment, a beneficial combination comprising a substantially metal-free perchlorate salt of a first amine-containing stabilizer and a second amine-containing stabilizer provides improved early color, i.e., prolonged whiteness during initial processing, which is of particular importance in the manufacture of pipes from halogen-containing vinyl polymers. Alternatively, a beneficial combination comprising a substantially metal-free perchlorate salt of a first amine-containing stabilizer and a second amine-containing stabilizer can provide improved long-term color stability, preferably together with the improved early color.

The invention is further illustrated by the following examples, wherein PVC compositions for thermal stability testing were prepared by mixing, under high shear, 100 parts by weight of PVC resin, pigment (0:2 phr), mold release agents (0.5-2 phr), co-stabilizer (1-10 phr epoxidized soybean oil), and lubricants (0.2 to 2.0 phr), together with the stabilizer compositions shown in the Tables. The mixed compositions were then heated in a two-roll mill at 390°F (199°C) and samples were removed at the indicated time intervals and formed into chips. Color change (as reflected by dE) and yellowness (YI) of each chip was measured using a Hunter Labs (L, a, b) colorimeter.

Examples 1-3 show the beneficial effects obtained using a combination of 3,5-bis(ethoxycarbonyl)-2,6-dimethyl-1,4-dihydropyridine (DHP) and triethanolammonium perchlorate (i.e., the substantially metal-free perchlorate salt of triethanolamine). The triethanolammonium perchlorate is added as a 3.7% (w/w) solution.

**Table 1**

| **Stabilizer Component** | **Example No.** | | |
|---|---|---|---|
| | **1*** | **2** | **3** |
| DHP | 0.34 | 0.34 | 0.34 |
| Sodium perchlorate | 0.018 | 0 | 0 |
| Triethanolamine | 0.10 | 0 | 0.10 |
| Triethanolammonium perchlorate | - | 0.0465 | 0.0465 |
| | | | |

| Result | | | |
|---|---|---|---|
| dE at minute | | | |
| 1 | 20.3 | 20.0 | 19.0 |
| 2 | 15.5 | 12.3 | 12.6 |
| 3 | 16.8 | 14.0 | 14.9 |
| 4 | 17.4 | 15.3 | 15.4 |
| 5 | 17.1 | 16.5 | 16.4 |
| 6 | 18.6 | 17.2 | 17.0 |
| 7 | 19.5 | 20.0 | 18.8 |
| 8 | 24.3 | 23.0 | 22.6 |
| 9 | 26.8 | 27.2 | 24.9 |
| 10 | 29.5 | 29.3 | 28.5 |
| 11 | 32.0 | 31.9 | 30.9 |
| 12 | 34.1 | 33.4 | 32.4 |

| | | | |
|---|---|---|---|
| *Control example | | | |

As shown in Table 1, the two-part combination of triethanolammonium perchlorate and DHP provides similar stabilization to the three-part combination of triethanolamine, sodium perchlorate and DHP. Thus, a metal-free perchlorate salt of an amine-containing stabilizer can replace a combination of a metal perchlorate and an amine-containing stabilizer.

Examples 4-8 show the beneficial effects obtained using a combination of DHP or an aminocrotonate and triethanolammonium perchlorate.

**Table 2**

| **Stabilizer Component** | **Example No.** | | | | |
|---|---|---|---|---|---|
| | **4*** | **5*** | **6** | **7*** | **8** |
| DHP | 0 | 0 | 0.34 | 0 | 0 |
| Sodium perchlorate | 0.018 | 0 | 0 | 0.018 | 0 |
| Triethanolamine | 0.10 | 0.10 | 0.10 | 0.10 | 0.10 |
| 1,4-butanediol bis(3-aminocrotonate) | 0 | 0 | 0 | 0.40 | 0.40 |
| Triethanolammonium perchlorate | 0 | 0.0465 | 0.0465 | 0 | 0.0465 |
| | | | | | |

| Result | | | | | |
|---|---|---|---|---|---|
| dE at minute | | | | | |
| 1 | 21.1 | 20.7 | 14.8 | 18.1 | 16.6 |
| 2 | 28.3 | 28.4 | 14.6 | 19.8 | 18.8 |
| 3 | 35.7 | 37.5 | 17.1 | 22.5 | 22.4 |
| 4 | 46.4 | 45.4 | 24.2 | 26.2 | 26.2 |
| 5 | | | 30.1 | 31.3 | 32.1 |

| | | | | | |
|---|---|---|---|---|---|
| *Control | | | | | |

As shown in Table 2, the two-part combination of 1,4-butanediol bis(3-aminocrotonate) and triethanolammonium perchlorate (Example 8) exhibits similar stabilization to the three-part combination of 1,4-butanediol bis(3-aminocrotonate), sodium perchlorate and triethanolamine (Example 7). Both DHP and 1,4-butanediol bis(3-aminocrotonate) in combination with triethanolammonium perchlorate provides suitable stabilization.

All ranges disclosed herein are inclusive and combinable.

## Claims

1. A stabilizer composition comprising a substantially metal-free perchlorate; a first amine-containing stabilizer; and a second amine-containing stabilizer; wherein the first and second amine-containing stabilizers are selected from an aminoalcohol, a dihydropyridine, an aminocrotonate, an aminouracil, a phenyl indole, or a mixture comprising one or more of the foregoing amine-containing stabilizers; and wherein the first and second amine-containing stabilizers are different types of stabilizers.

2. The stabilizer composition of claim 1, wherein the first amine-containing stabilizer is an aminoalcohol of formula 3: 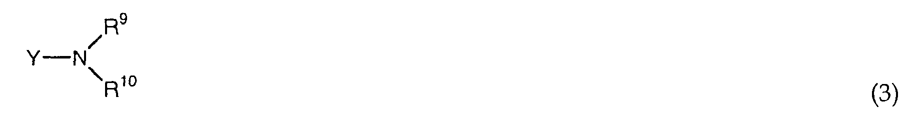 wherein Y is a substituted or unsubstituted C₁-C₃₆ alkyl, C₆-C₃₆ aryl, C₇-C₃₆ alkaryl, or C₇-C₃₆ aralkyl group; R⁹ and R¹⁰ are each independently hydrogen or a substituted or unsubstituted C₁-C₃₆ alkyl, C₆-C₃₆ aryl, C₇-C₃₆ alkaryl, or C₇-C₃₆ aralkyl group, and two of Y, R⁹, or R¹⁰ may join together to form a substituted or unsubstituted C₂-C₃₆ carbocyclic or heterocyclic group having oxygen or sulfur heteroatoms in the ring, and further wherein Y, R⁹, and R¹⁰ are substituted so as to provide the aminoalcohol with two or more hydroxy groups.

3. The stabilizer composition of claim 1, or 2 wherein the second amine-containing stabilizer is a dihydropyridine, a polydihydropyridine, or a mixture thereof, wherein the dihydropyridine is of formula (1) 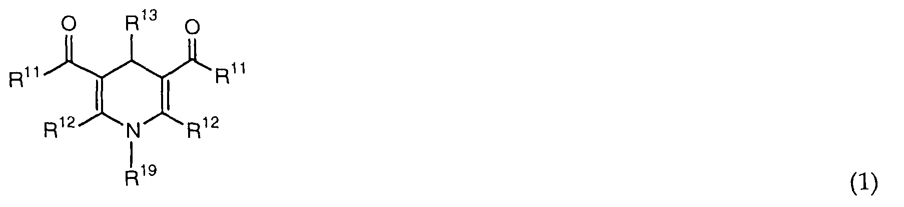 wherein each R¹² is independently a C₁-C₃₆ alkyl group, each R¹¹ is independently hydrogen, -OR¹⁴, -NHR¹⁴, or -NR¹⁴R¹⁵ each R¹⁴ and R¹⁵ is independently a substituted or unsubstituted C₁-C₂₀ alkyl or C₂-C₂₀ alkenyl group, each R¹³ is independently hydrogen, oxygen, halogen, or a substituted or unsubstituted C₁ to C₃₆ alkyl, alkenyl, aryl, alkaryl, or aralkyl group, and R¹⁹ is a hydrogen, a substituted or unsubstituted C₁-C₂₀ alkyl, C₆-C₃₆ aryl, or C₆-C₃₆ alkaryl group, and wherein the polydihydropyridine is of formula (2): 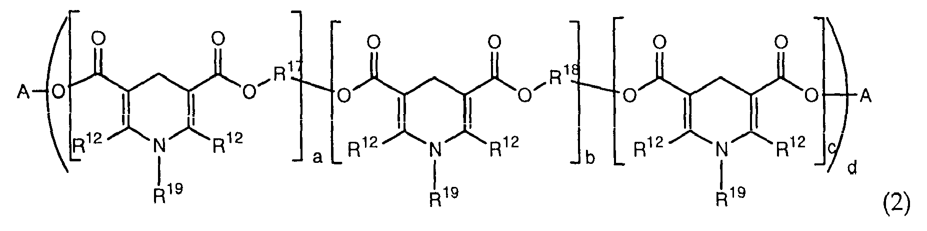 wherein A is a C₆₋₁₈ aryl or C₁₋₂₂ alkyl group that is unsubstituted or substituted with a C₁-C₁₈ alkoxy, C₁-C₁₈ alkylthio, hydroxy, acryloyloxy, methacryloyloxy, halogen, phenyl or naphthyl group, each R¹² is independently a C₁ to C₃₆ alkyl group, a and b are a number from 0 to 20, c is 0 or 1, and d is a number from 1 to 6, with the proviso that d(a+b+c)>1 and (a+b)>0, R¹⁷ and R¹⁸ are each independently methylene, phenyl, or an alkylene group of the type (-CₚH₂ₚ-X-)ₜCₚH₂ₚ- wherein p is a number from 2 to 18, t is a number from 0 to 10, and X is oxygen or sulfur, and R¹⁹ is a hydrogen, a substituted or unsubstituted C₁-C₂₀ alkyl, C₆-C₃₆ aryl or C₆-C₃₆ alkaryl group.

4. The stabilizer composition of claim 1, 2, or 3, further comprising a polyol co-stabilizer.

5. The stabilizer composition of claim 1, 2, 3, or 4, wherein the substantially metal-free perchlorate is provided to the stabilizer composition in the form of hydrogen perchlorate, a perchlorate salt, a perchlorate salt comprising the first amine-containing stabilizer, a perchlorate salt comprising the second amine-containing stabilizer, or a combination comprising one or more of the foregoing perchlorates.

6. A method of stabilizing a halogen-containing vinyl polymer comprising adding to the halogen-containing vinyl polymer composition a stabilizer composition comprising a substantially metal-free perchlorate; a first amine-containing stabilizer; and a second amine-containing stabilizer; wherein the first and second amine-containing stabilizers are selected from an aminoalcohol, a dihydropyridine, an aminocrotonate, an aminouracil, a phenyl indole, or a mixture comprising one or more of the foregoing amine-containing stabilizers; and wherein the first and second amine-containing stabilizers are different types of stabilizers.

7. A polymeric composition, comprising
a halogen-containing vinyl polymer,
stabilizer composition comprising a substantially metal-free perchlorate; a first amine-containing stabilizer; and a second amine-containing stabilizer; wherein the first and second amine-containing stabilizers are selected from an aminoalcohol, a dihydropyridine, an aminocrotonate, an aminouracil, a phenyl indole, or a mixture comprising one or more of the foregoing amine-containing stabilizers; and wherein the first and second amine-containing stabilizers are different types of stabilizers.

8. The stabilized polymeric composition of claim 7, wherein the substantially metal-free perchlorate is provided to the stabilizer composition in the form of hydrogen perchlorate, a perchlorate salt, a perchlorate salt comprising the first amine-containing stabilizer, a perchlorate salt comprising the second amine-containing stabilizer, or a combination comprising one or more of the foregoing perchlorates.

9. The stabilized polymer composition of claim 7, comprising 0.001 to 10 phr of the metal-free perchlorate salt of the first amine-containing stabilizer, and 0.001 to 10 phr of the second amine-containing stabilizer.

10. An article comprising the stabilized polymer composition of claim 7, 8, or 9.
